# EUROPÄISCHE PATENTSCHRIFT

(11) **EP 3 140 168 B1**
(45) Veröffentlichungstag und Bekanntmachung des Hinweises auf die Patenterteilung: **11.03.2020**
(21) Anmeldenummer: 15715985.6
(22) Anmeldetag: 11.04.2015
(51) Int. Cl.: B60T 8/88, B60T 17/22

(54) **VERFAHREN ZUM ERKENNEN EINES FEHLVERBAUS VON BREMSLEITUNGEN**
METHOD FOR DETECTING AN INCORRECT INSTALLATION OF BRAKE LINES
PROCÉDÉ DE DÉTECTION D'UN DYSFONCTIONNEMENT DE CONDUITS DE FREINAGE

(30) Priorität: 03.05.2014 DE 102014006584
(43) Veröffentlichungstag der Anmeldung: 15.03.2017
(73) Patentinhaber: Audi AG, 85045 Ingolstadt (DE)
(72) Erfinder: RUMER, Wolfgang, 85107 Baar-Ebenhausen (DE); SCHNEIDER, Werner, 85051 Ingolstadt (DE)
(74) Vertreter: Reichert, Thomas Klaus
(86) Internationale Anmeldenummer: PCT/EP2015/000764
(87) Internationale Veröffentlichungsnummer: WO 2015/169419

(56) Entgegenhaltungen:
- EP-A1- 2 671 769
- EP-A2- 0 933 275
- EP-A2- 0 937 618
- EP-A2- 0 965 509
- DE-A1- 19 603 863
- DE-A1-102011 081 240
- DE-A1-102013 203 189
- DE-T5-112011 105 331
- JP-A- 2002 308 087

## Beschreibung

Die vorliegende Erfindung betrifft ein Verfahren zum Erkennen eines Fehlverbaus von Bremsleitungen einer Bremsanlage für ein mehrachsiges Kraftfahrzeug, wobei die Bremsanlage einen Primärkreis mit einem ersten ESP-Subsystem, umfassend einen Primärspeicher für Bremsflüssigkeit und mindestens ein Auslassventil, der den Radbremsen einer ersten Achse zugeordnet ist, und einen Sekundärkreis mit einem zweiten ESP-Subsystem, umfassend einen Sekundärspeicher für Bremsflüssigkeit und mindestens ein Auslassventil, der den Radbremsen einer zweiten Achse zugeordnet ist, aufweist, wobei der Primärkreis ein größeres Bremsflüssigkeitsvolumen bietet als der Sekundärkreis und wobei zwei Bremsleitungen einen Tandemhauptbremszylinder entsprechend jeweils mit dem Primärkreis und dem Sekundärkreis verbinden.

Die Bremsanlage eines Kraftfahrzeugs dient der hydraulischen Betätigung der Betriebsbremsen der Räder zum Verzögern des fahrenden Kraftfahrzeugs bzw. zum Halten desselbigen im Stand. Nach der Norm DIN 74000 ist eine redundante Ausführung der Bremsanlage mit zwei Bremskreisen vorgeschrieben. Von allen möglichen Varianten hat sich in der Praxis nur die Diagonal-Aufteilung (auch X-Aufteilung genannt) mit jeweils einem Bremskreis für die achsweise diagonal gegenüber liegenden Räder und die Schwärz-Weiß-Aufteilung (auch TT- oder II-Aufteilung genannt) mit jeweils einem Bremskreis pro Achse durchgesetzt. Ein Bremspedal wirkt auf den Tandemhauptbremszylinder, von dem zwei separate Bremsleitungen zu jeweils einem Bremskreis mit jeweils einem Subsystem des ESP-Systems ("elektronisches Stabilitätsprogramm" oder auch ESC-System "Electronic Stability Control" genannt) führen. Die Bremsanlage ist mit einer Bremsflüssigkeit befüllt.

Da eine Achse, insbesondere die Vorderachse, aufgrund der Achslastverlagerung beim Verzögern des Kraftfahrzeugs bzw. der Anordnung des Antriebsaggregats im Kraftfahrzeug, mehr Kraft zwischen Reifen und Fahrbahn übertragen kann, ist dieser Bremskreis bei einer Schwarz-Weiß-Aufteilung bezüglich seines Volumens größer dimensioniert als der Bremskreis der anderen Achse, insbesondere der Hinterachse. Dadurch ergibt sich ein Primärkreis mit höherem Volumen und ein Sekundärkreis mit geringerem Volumen. Werden die beiden Bremsleitungen bei der Montage vertauscht, so ist dies bei einem gewöhnlichen Betrieb des Kraftfahrzeugs nicht detektierbar. Erst wenn die Belastung der Bremsanlage steigt, wird sich das Volumen der Bremsflüssigkeit an der Vorderachse unter anderem aufgrund von "Fading" (Nachlassen der Reibwirkung des Bremsbelags der Betriebsbremse unter Temperatureinfluss) wesentlich früher als vorgesehen erschöpfen.

Die JP 2002308087 A2 zeigt ein Verfahren zum Erkennen eines Fehlverbaus von Bremsleitungen in einer Bremsanlage. Eine Kontrolleinrichtung hat einen Antrieb, um ein Rad mit einer vorgeschriebenen Winkelgeschwindigkeit in Rotation zu versetzen. Eine Geschwindigkeitsmesseinrichtung ist dazu ausgebildet die Winkelgeschwindigkeit des Rades zu erfassen. Eine Bremsensteuerungseinrichtung kann eine definierte Bremskraft auf das Rad ausüben. Aufgrund der Veränderung der Winkelgeschwindigkeit nach Aufbringen der Bremskraft kann eine Prüfeinrichtung feststellen, ob der Verbau der Bremsleitungen korrekt war.

Die JP 2010105431 A2 betrifft ein Verfahren zum Erkennen eines Fehlverbaus von Bremsleitungen in einer Bremsanlage. Absperrventile sind jeweils in einer der beiden Vorlauf-Bremsleitungen, die an einem Primärzylinder bzw. an einem Sekundärzylinder eines Tandemhauptbremszylinders angeschlossen sind, angeordnet. Ein Drucksensor ist in mindestens einer der beiden Rücklauf-Bremsleitungen, die den Sekundärzylinder mit den Bremskolben der Radbremsen verbindet, angeordnet. Im Primärzylinder wird Bremsflüssigkeitsdruck in einem Wechselzustand der Absperrventile erzeugt und der Drucksensor erkennt, ob der Bremsflüssigkeitsdruck einem normalen Niveau entspricht.

Aufgabe der vorliegenden Erfindung ist es daher ein Verfahren zum Erkennen eines Fehlverbaus von Bremsleitungen bei einer Bremsanlage mit achsweise zugeordneten Bremskreisen ("Schwarz-Weiß-Aufteilung") bereitzustellen.

Diese Aufgabe wird durch die Merkmale des Patentanspruchs 1 gelöst.

Ein Verfahren zum Erkennen eines Fehlverbaus von Bremsleitungen einer Bremsanlage für ein mehrachsiges Kraftfahrzeug, wobei die Bremsanlage einen Primärkreis mit einem ersten ESP-Subsystem, umfassend einen Primärspeicher für Bremsflüssigkeit und mindestens ein Auslassventil, der den Radbremsen einer ersten Achse zugeordnet ist, und einen Sekundärkreis mit einem zweiten ESP-Subsystem, umfassend einen Sekundärspeicher für Bremsflüssigkeit und mindestens ein Auslassventil, der den Radbremsen einer zweiten Achse zugeordnet ist, aufweist, wobei der Primärkreis ein größeres Bremsflüssigkeitsvolumen bietet als der Sekundärkreis, wobei zwei Bremsleitungen einen Tandemhauptbremszylinder entsprechend jeweils mit dem Primärkreis und dem Sekundärkreis verbinden, wobei in einem ersten Schritt der Tandemhauptbremszylinder bei geöffneten Auslassventilen druckaufbauend betätigt wird, um den Primärspeicher und den Sekundärspeicher vollständig mit Bremsflüssigkeit zu befüllen, wobei die Auslassventile geschlossen werden, sobald die Speicher vollständig befüllt sind, und in einem weiteren Schritt zumindest ein sich drehendes Rad der ersten Achse durch anhaltende Betätigung des Tandemhauptbremszylinders abgebremst wird und wobei eine Messeinrichtung in Abhängigkeit des Abbremsverhaltens einen korrekten oder fehlerhaften Verbau der Bremsleitungen ausweist.

Indem beide Bremskreise zunächst durch Betätigung des Tandemhauptbremszylinders bei geöffneten Auslassventilen in die entsprechenden Speicher "entleert" werden, also das Bremsflüssigkeitsvolumen bis zur maximalen Aufnahmekapazität in die Speicher überführt wird, kann bei der darauffolgenden Abbremsung zumindest eines drehenden Rades der ersten Achse aufgrund des festgestellten Abbremsverhaltens darauf geschlossen werden, ob die Bremsleitungen korrekt oder fehlerhaft verbaut wurden. Dies ergibt sich durch die konstruktive Volumenauslegung des Tandemhauptbremszylinders in Verbindung mit dem Volumenunterschied zwischen Primärkreis und Sekundärkreis. Wurden die Bremsleitungen zwischen Tandemhauptbremszylinder und den beiden Subsystemen des ESP-Systems nämlich vertauscht, so steht bei der Abbremsung des zumindest einen Rades der ersten Achse nur das durch Befüllung des Speichers reduzierte Bremsflüssigkeitsvolumen des Sekundärkreises zur Verfügung, was nicht ausreicht, um damit das definierte Abbremsverhalten zu erzielen. Dies kann nur bei korrektem Verbau und entsprechender Nutzung des Primärkreises erreicht werden. Somit kann ohne zusätzliche Mittel eine zuverlässige Überprüfung des Verbaus der Bremsleitungen durchgeführt werden. Es muss lediglich eine ESP-Prüfroutine zum Befüllen und Entleeren der Speicher implementiert werden. Die Prüfung erfolgt bevorzugt am Bandende, wo das Kraftfahrzeug auf einen Rollenprüfstand gefahren wird. Der die Prüfung durchführende Mitarbeiter betätigt den Tandemhauptbremszylinder vorzugsweise manuell durch das Drücken des Bremspedals und startet die Prüfroutine des ESP-Steuergeräts durch entsprechende Eingaben. Die Abarbeitung der einzelnen Verfahrensschritte wird durch geeignete Kommunikation zwischen Fahrzeug und Rollenprüfstand (halb-)automatisch vorgenommen. Die Auslassventile sind ein Standardbauteil in üblichen ESP-Systemen und sind in bekannter Weise zwischen Radbremsen und dem jeweiligen Speicher geschaltet. Ein zweiachsiges und zweispuriges Fahrzeug hat demnach vier Auslassventile (eines für jedes Rad).

In einer bevorzugten Ausführung ist das definierte Abbremsverhalten durch einen Schwellwert der Winkelbeschleunigung des zumindest einen Rades definiert. Das Rad wird bei Betätigung des Tandemhauptbremszylinder und dem daraus folgenden Spannen der Radbremsen verzögert, was einer negativen Winkelbeschleunigung entspricht. Überschreitet diese einen vorab festgelegten Schwellwert, so wird auf korrekten Verbau der Bremsleitungen entschieden. Kann der Schwellwert nicht überschritten werden, so signalisiert die Messeinrichtung einen fehlerhaften Verbau, der in einem weiteren Verfahrensschritt durch Tausch der Bremsleitungen am Tandemhauptbremszylinder zu beheben ist.

In einer bevorzugten Ausführung ist das definierte Abbremsverhalten durch einen Schwellwert für eine Zeitdauer bis zum Stillstand des zumindest einen Rades definiert. Das Rad wird bei Betätigung des Tandemhauptbremszylinder und dem daraus folgenden Spannen der Radbremsen bis in den Stillstand (Winkelgeschwindigkeit gleich null) verzögert. Dafür ist in Abhängigkeit des anliegenden Bremsdrucks eine bestimmte Zeitdauer erforderlich. Überschreitet diese einen vorab festgelegten Schwellwert, so wird auf fehlerhaften Verbau der Bremsleitungen entschieden, der in einem weiteren Verfahrensschritt durch Tausch der Bremsleitungen am Tandemhauptbremszylinder zu beheben ist. Kann der Schwellwert hingegen unterschritten werden, so signalisiert die Messeinrichtung einen korrekten Verbau der Bremsleitungen.

In einer bevorzugten Ausführung wird das zumindest eine Rad der ersten Achse auf einem Rollenprüfstand mit einer definierten Anfangs-Winkelgeschwindigkeit gedreht. Dies erfolgt vorzugsweise ohne Beteiligung der Antriebseinheit des Kraftfahrzeugs und stellt gleichbleibende Ausgangsbedingungen sicher. Ist die vorbestimmte Anfangs-Winkelgeschwindigkeit erreicht, so beginnt die Messeinrichtung mit der Aufzeichnung. Der Tandemhauptbremszylinder bleibt seit Beginn der Prüfroutine durch das Treten des Bremspedals betätigt. In einer besonders bevorzugten Ausführung umfasst der Rollenprüfstand die Messeinrichtung, die das Prüfergebnis nach Abschluss an den das Verfahren durchführenden Mitarbeiter ausgibt.

In einer bevorzugten Ausführung werden in einem abschließenden Verfahrensschritt die Speicher durch Öffnen der Auslassventile zumindest teilweise entleert. Dieser entlastende Schritt ist zum Erkennen des Fehlverbaus der Bremsleitungen selbst nicht notwendig, stellt zum Abschluss des Verfahrens jedoch die Funktionsfähigkeit der Bremsanlage wieder her.

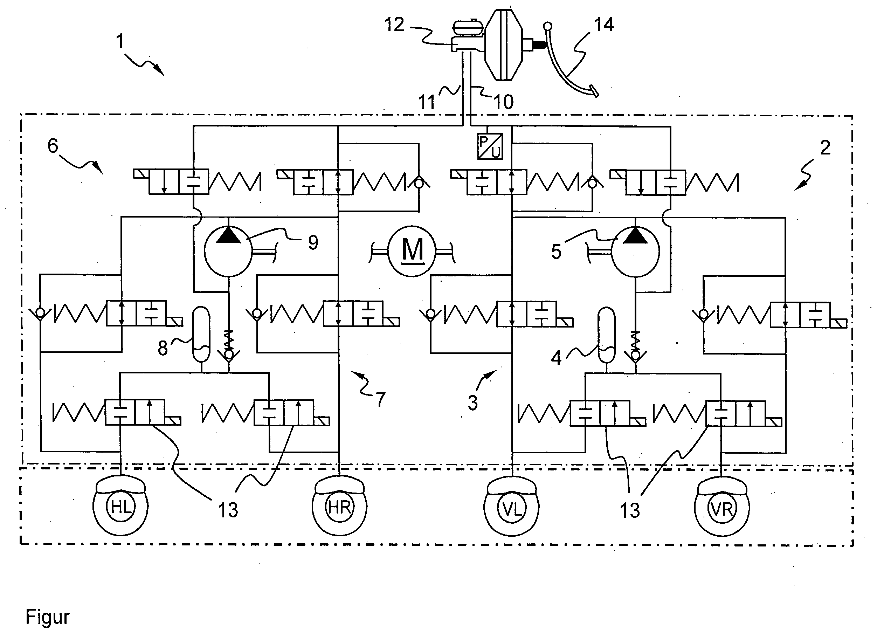

Weitere Einzelheiten und Merkmale der vorliegenden Erfindung ergeben sich aus der nachstehenden Beschreibung eines bevorzugten Ausführungsbeispiels unter Bezugnahme auf die Zeichnung.

Darin zeigt die einzige Figur eine schematische Darstellung der Bremsanlage.

Gemäß der Figur hat eine Bremsanlage 1 für ein mehrachsiges, vorliegend ein zweiachsiges, Kraftfahrzeug einen Tandemhauptbremszylinder 12 bekannter Bauart, der von einem Bremspedal 14 manuell betätigt werden kann. An dem Tandemhauptbremszylinder 12 sind zwei Bremsleitungen 10 und 11 angeschlossen, die jeweils zu einem ESP-Subsystem 3 oder 7 führen. Jedes ESP-Subsystem 3 bzw. 7 hat neben den dargestellten Fluidleitungen und Ventilen weiterhin eine Fördereinrichtung 5 bzw. 9, die von einem gemeinsamen Motor M angetrieben werden können, sowie jeweils einen Speicher 4 bzw. 8 für Bremsflüssigkeit. Durch Schaltung der korrespondierenden Auslassventile 13 können die Speicher 4 bzw. 8 entweder durch den vom Tandemhauptbremszylinder 12 erzeugten Bremsdruck oder durch die Fördereinrichtungen 5 bzw. 9 befüllt oder entleert werden. An den ESP-Subsystemen 3 bzw. 7 sind die jeweils einem Rad zugeordneten Radbremsen VL und VR bzw. HL und HR angeschlossen. Im korrekt verbauten Zustand bilden unter anderem die Bremsleitung 10, das ESP-Subsystem 3, bestehend aus Primärspeicher 4, erster Fördereinrichtung 5, den beiden Auslassventilen 13 sowie den Radbremsen VL und VR den Primärkreis 2 der ersten Achse des Kraftfahrzeugs (Vorderachse). Die in der Figur zwischen Bremsleitung 10 und den Radbremsen VL und VR der Vorderachse dargestellten Leitungen und Schaltelemente gehören selbstverständlich ebenso dem Primärkreis 2 an, sollen in diesem Zusammenhang jedoch nicht weiter diskutiert werden. Die Bremsleitung 11, das ESP-Subsystem 7, bestehend aus Sekundärspeicher 8, zweiter Fördereinrichtung 9, den Auslassventilen 13, sowie den Radbremsen HL und HR bilden im korrekt verbauten Zustand den Sekundärkreis 6 der zweiten Achse des Kraftfahrzeugs (Hinterachse). Die in der Figur zwischen Bremsleitung 11 und den Radbremsen HL und HR der Hinterachse dargestellten Leitungen und Schaltelemente gehören selbstverständlich ebenso dem Sekundärkreis 6 an, sollen in diesem Zusammenhang jedoch nicht weiter diskutiert werden. Der Tandemhauptbremszylinder 12, der Primärkreis 2 und der Sekundärkreis 6 sind so ausgelegt, dass der Primärkreis 2 ein größeres Bremsflüssigkeitsvolumen bietet als der Sekundärkreis 6.

Zu Beginn der Prüfroutine drückt eine die Prüfung durchführende Person das Bremspedal 14 durch und betätigt somit den Tandemhauptbremszylinder 12 im Sinne eines hydraulischen Druckaufbaus in der Bremsanlage 1. Ein nicht dargestelltes ESP-Steuergerät wird sodann in einen Prüfmodus geschaltet, wodurch zumindest die Auslassventile 13 des Primärkreises 2 und des Sekundärkreises 6 geöffnet werden. Der vom Tandemhauptbremszylinder 12 in der Bremsanlage 1 aufgebaute Bremsflüssigkeitsdruck führt nun dazu, dass die Speicher 4 und 8 mit Bremsflüssigkeit aus den beiden Bremskreisen 2 und 6 bis zu deren jeweiligen Maximum befüllt werden, wobei der Primärspeicher 4 mehr Volumen zur Verfügung stellen kann, als der Sekundärspeicher 8. Anschließend werden die Räder der ersten Achse auf einem nicht dargestellten Rollenprüfstand auf eine definierte Winkelgeschwindigkeit gebracht und eine Messeinrichtung des Rollenprüfstands in Aufnahmebereitschaft versetzt. Durch anhaltende Betätigung des Tandemhauptbremszylinders 12 erfolgt eine Verzögerung der Räder der ersten Achse durch die Radbremsen VL und VR, wobei die Messeinrichtung feststellt, ob das konkret gemessene Abbremsverhalten einem vorab definierten Abbremsverhalten entspricht. Ist dies der Fall, so wird auf einen korrekten Verbau der Bremsleitungen 10 und 11 entschieden. Kann das gemessene Abbremsverhalten das vorab definierte Abbremsverhalten nicht erreichen, so liegt ein fehlerhafter Verbau der Bremsleitungen 10 und 11 vor. Zum Schluss wird die Prüfroutine beendet, indem die Bremsanlage 1 durch Öffnen der Auslassventile 13 wieder in seinen Ausgangszustand zurückgeführt wird.

### Liste der Bezugszeichen:

- M: Motor
- VL: Radbremse vorne links
- VR: Radbremse vorne rechts
- HL: Radbremse hinten links
- HR: Radbremse hinten rechts

- 1: Bremsanlage
- 2: Primärkreis
- 3: erstes ESP-Subsystem
- 4: Primärspeicher
- 5: erste Fördereinrichtung
- 6: Sekundärkreis
- 7: zweites ESP-Subsystem
- 8: Sekundärspeicher
- 9: zweite Fördereinrichtung
- 10: Bremsleitung
- 11: Bremsleitung
- 12: Tandemhauptbremszylinder
- 13: Auslassventil
- 14: Bremspedal

## Patentansprüche

1. Verfahren zum Erkennen eines Fehlverbaus von Bremsleitungen (10, 11) einer Bremsanlage (1) für ein mehrachsiges Kraftfahrzeug, wobei die Bremsanlage (1) einen Primärkreis (2) mit einem ersten ESP-Subsystem (3), umfassend einen Primärspeicher (4) für Bremsflüssigkeit und mindestens ein Auslassventil (13), der den Radbremsen (VL, VR) einer ersten Achse zugeordnet ist, und einen Sekundärkreis (6) mit einem zweiten ESP-Subsystem (7), umfassend einen Sekundärspeicher (8) für Bremsflüssigkeit und mindestens ein Auslassventil (13), der den Radbremsen (HL, HR) einer zweiten Achse zugeordnet ist, aufweist, wobei der Primärkreis (2) ein größeres Bremsflüssigkeitsvolumen bietet als der Sekundärkreis (6) und wobei zwei Bremsleitungen (10, 11) einen Tandemhauptbremszylinder (12) entsprechend jeweils mit dem Primärkreis (2) und dem Sekundärkreis (6) verbinden, **dadurch gekennzeichnet, dass** in einem ersten Schritt der Tandemhauptbremszylinder (12) bei geöffneten Auslassventilen (13) druckaufbauend betätigt wird, um den Primärspeicher (4) und den Sekundärspeicher (8) vollständig mit Bremsflüssigkeit zu befüllen, wobei die Auslassventile (13) geschlossen werden, sobald die Speicher (4, 8) vollständig befüllt sind, und in einem weiteren Schritt zumindest ein sich drehendes Rad der ersten Achse durch anhaltende Betätigung des Tandemhauptbremszylinders (12) abgebremst wird, wobei eine Messeinrichtung in Abhängigkeit des Abbremsverhaltens einen korrekten oder fehlerhaften Verbau der Bremsleitungen (10, 11) ausweist.

2. Verfahren nach Anspruch 1, **dadurch gekennzeichnet, dass** das definierte Abbremsverhalten durch einen Schwellwert der Winkelbeschleunigung des zumindest einen Rades definiert ist.

3. Verfahren nach Anspruch 1, **dadurch gekennzeichnet, dass** das definierte Abbremsverhalten durch einen Schwellwert für eine Zeitdauer bis zum Stillstand des zumindest einen Rades definiert ist.

4. Verfahren nach einem der Ansprüche 1 bis 3, **dadurch gekennzeichnet, dass** das zumindest eine Rad der ersten Achse auf einem Rollenprüfstand mit einer definierten Anfangs-Winkelgeschwindigkeit gedreht wird.

5. Verfahren nach Anspruch 4, **dadurch gekennzeichnet, dass** der Rollenprüfstand die Messeinrichtung umfasst.

6. Verfahren nach einem der Ansprüche 1 bis 5, **dadurch gekennzeichnet, dass** in einem abschließenden Schritt die Speicher (4, 8) durch Öffnen der Auslassventile (13) zumindest teilweise entleert werden.

## Claims

1. Method for detecting an incorrect installation of brake lines (10, 11) in a brake system (1) for a multi-axle motor vehicle, wherein the brake system (1) comprises a primary circuit (2) having a first ESP subsystem (3), comprising a primary reservoir (4) for brake fluid and at least one outlet valve (13) assigned to the wheel brakes (VL, VR) of a first axle, and comprises a secondary circuit (6) having a second ESP subsystem (7), comprising a secondary reservoir (8) for brake fluid and at least one outlet valve (13) assigned to the wheel brakes (HL, HR) of a second axle, wherein the primary circuit (2) provides a larger brake fluid volume than the secondary circuit (6), and wherein two brake lines (10, 11) correspondingly connect a tandem main brake cylinder (12) to the primary circuit (2) and the secondary circuit (6) respectively, **characterised in that** in a first step, the tandem main brake cylinder (12) is actuated in a pressure-building way with opened outlet valves (13) in order to completely fill the primary reservoir (4) and the secondary reservoir (8) with brake fluid, wherein the outlet valves (13) are closed as soon as the reservoirs (4, 8) are completely filled, and in a further step, at least one rotating wheel of the first axle is braked by sustained actuation of the tandem main brake cylinder (12), wherein a measuring device identifies a correct or defective installation of the brake lines (10, 11) depending on the braking behaviour.

2. Method according to claim 1, **characterised in that** the defined braking behaviour is defined by a threshold value of the angular acceleration of the at least one wheel.

3. Method according to claim 1, **characterised in that** the defined braking behaviour is defined by a threshold value for a time period until the at least one wheel comes to a standstill.

4. Method according to any one of claims 1 to 3, **characterised in that** the at least one wheel of the first axle is rotated on a chassis dynamometer with a defined initial angular velocity.

5. Method according to claim 4, **characterised in that** the chassis dynamometer comprises the measuring device.

6. Method according to any one of claims 1 to 5, **characterised in that** in a final step, the reservoirs (4, 8) are at least partially emptied by opening the outlet valves (13).

## Revendications

1. Procédé de reconnaissance d'un dysfonctionnement de conduits de freinage (10, 11) d'une installation de freinage (1) pour un véhicule automobile à plusieurs essieux, dans lequel l'installation de freinage (1) présente un circuit primaire (2) avec un premier sous-système ESP (3), comprenant un accumulateur primaire (4) pour du liquide de freinage et au moins une soupape de sortie (13) qui est associée aux freins de roue (VL, VR) d'un premier essieu, et un circuit secondaire (6) avec un second sous-système ESP (7), comprenant un accumulateur secondaire (8) pour du liquide de freinage et au moins une soupape de sortie (13) qui est associée aux freins de roue (HL, HR) d'un second essieu, dans lequel le circuit primaire (2) offre un volume de liquide de freinage supérieur au circuit secondaire (6) et dans lequel deux conduits de freinage (10, 11) relient un cylindre de frein principal en tandem (12) de manière correspondante respectivement au circuit primaire (2) et au circuit secondaire (6), **caractérisé en ce que** dans une première étape, le cylindre de frein principal en tandem (12) est actionné en établissant la pression en cas de soupapes de sortie ouvertes (13) afin de remplir l'accumulateur primaire (4) et l'accumulateur secondaire (8) complètement avec du liquide de freinage, dans lequel les soupapes de sortie (13) sont fermées dès que les accumulateurs (4, 8) sont complètement remplis, et dans une autre étape au moins une roue rotative du premier essieu est freinée par actionnement persistant du cylindre de frein principal en tandem (12), dans lequel un dispositif de mesure présente en fonction du comportement de freinage un fonctionnement correct ou incorrect des conduits de freinage (10, 11).

2. Procédé selon la revendication 1, **caractérisé en ce que** le comportement de freinage défini est défini par une valeur seuil de l'accélération angulaire d'au moins une roue.

3. Procédé selon la revendication 1, **caractérisé en ce que** le comportement de freinage défini est défini par une valeur seuil pour une durée jusqu'à l'arrêt d'au moins une roue.

4. Procédé selon l'une des revendications 1 à 3, **caractérisé en ce que** l'au moins une roue du premier essieu est tournée sur un banc d'essai à rouleaux avec une vitesse angulaire de départ définie.

5. Procédé selon la revendication 4, **caractérisé en ce que** le banc d'essai à rouleaux de rouleau comporte le dispositif de mesure.

6. Procédé selon l'une des revendications 1 à 5, **caractérisé en ce que** dans une étape terminale les accumulateurs (4, 8) sont vidés au moins partiellement par ouverture des soupapes de sortie (13).
